# FASCICULE DE BREVET EUROPEEN

(11) **EP 3 448 751 B1**
(45) Date de publication et mention de la délivrance du brevet: **14.10.2020**
(21) Numéro de dépôt: 17725308.5
(22) Date de dépôt: 24.04.2017
(51) Int. Cl.: B64C 27/04, B64D 41/00, F02C 7/272

(54) **SYSTEME AUXILIAIRE D'ENTRAINEMENT D'UN ARBRE D'UN SYSTEME PROPULSIF D'UN HELICOPTERE**
HILFSSYSTEM ZUM ANTRIEB EINER WELLE EINES HUBSCHRAUBERANTRIEBSSYSTEMS
AUXILIARY SYSTEM FOR DRIVING A SHAFT OF A HELICOPTER PROPULSION SYSTEM

(30) Priorité: 28.04.2016 FR 1653789
(43) Date de publication de la demande: 06.03.2019
(73) Titulaire: Safran Helicopter Engines, 64510 Bordes (FR)
(72) Inventeur: THIRIET, Romain, 77550 Moissy-Crayamel (FR); SERGHINE, Camel, 77550 Moissy-Crayamel (FR); DEMEZON, Guillaume, 33000 Bordeaux (FR)
(74) Mandataire: Gevers & Orès
(86) Numéro de dépôt international: PCT/FR2017/050974
(87) Numéro de publication internationale: WO 2017/187078

(56) Documents cités:
- WO-A1-2015/145040
- WO-A1-2015/150680
- FR-A1- 3 019 588
- FR-A1- 3 024 180
- GB-A- 2 460 246

## Description

### 1. Domaine technique de l'invention

L'invention concerne un système auxiliaire d'entrainement d'un arbre d'un système propulsif d'un hélicoptère. Un tel système auxiliaire est par exemple destiné à fournir ponctuellement de la puissance mécanique pour réactiver un turbomoteur en veille, ou pour assister une manœuvre d'autorotation d'un hélicoptère monomoteur ou pour assurer un complément de puissance propulsive ponctuelle ou pour assister un hélicoptère multi moteurs dont un moteur n'est pas opérationnel (situation connue sous l'acronyme anglais OEI pour *One Engine Inoperative*). L'invention concerne également un hélicoptère équipé d'un tel système auxiliaire d'entrainement mécanique.

### 2. Arrière-plan technologique

Il existe de nombreuses situations au cours d'un vol d'un hélicoptère (monomoteur ou multi-moteurs) où une puissance mécanique ponctuelle s'avère nécessaire pour sécuriser le vol.

Par exemple, il a déjà été proposé par le demandeur dans la demande FR3019588 un dispositif d'assistance mécanique d'un système propulsif d'un hélicoptère monomoteur permettant de fournir ponctuellement, à partir d'un générateur de gaz à propergol solide, une puissance propulsive directement au rotor de l'hélicoptère au cours d'un vol en autorotation. Une telle solution permet donc de pallier une défaillance du turbomoteur par la fourniture d'une puissance mécanique d'appoint à l'hélicoptère permettant de fiabiliser la manœuvre d'autorotation en cas de panne du turbomoteur.

Cette solution semble prometteuse, mais nécessite une quantité importante de propergol embarqué en zone moteur. En outre, le système pyrotechnique n'étant pas clos, il participe à l'émission de gaz éjectés à l'extérieur du système. Cette quantité importante de propergol peut poser des difficultés notamment concernant la réglementation au transport.

Il a également été proposé par le demandeur dans la demande FR 3019221 un dispositif hydraulique de démarrage d'urgence d'un turbomoteur permettant de fournir, par l'intermédiaire de moyens hydrauliques, une puissance mécanique de démarrage d'un turbomoteur.

Cette solution est prometteuse mais l'encombrement du système pourrait poser quelques problèmes pour une intégration dans certains hélicoptères.

Les inventeurs ont donc cherché à proposer une solution permettant de fournir ponctuellement une puissance mécanique à au moins un arbre d'un système propulsif d'un hélicoptère, cet arbre pouvant être un arbre d'une boite de transmission de puissance, ou un arbre d'un turbomoteur, et de manière générale tout arbre relié directement ou indirectement au rotor de l'hélicoptère.

Les inventeurs ont en particulier cherché à proposer une nouvelle solution pour fournir ponctuellement une puissance mécanique à un système propulsif d'un hélicoptère qui réponde aux critères de légèreté et de faible encombrement.

### 3. Objectifs de l'invention

L'invention vise à fournir un système auxiliaire d'entrainement en rotation d'un arbre d'un système propulsif d'un hélicoptère.

L'invention vise aussi à fournir, dans au moins un mode de réalisation, un système auxiliaire d'entrainement en rotation d'un arbre d'un système propulsif d'un hélicoptère qui soit peu encombrant.

L'invention vise aussi à fournir, dans au moins un mode de réalisation, un système auxiliaire d'entrainement en rotation d'un arbre d'un système propulsif d'un hélicoptère qui soit léger.

L'invention vise aussi à fournir, dans au moins un mode de réalisation, un système auxiliaire d'entrainement en rotation d'un arbre d'un système propulsif d'un hélicoptère qui puisse être certifié pour différents types d'hélicoptère (monomoteur, bimoteurs, trimoteurs notamment) et pour pallier différentes pannes mécaniques.

L'invention vise aussi à fournir, dans au moins un mode de réalisation, un système auxiliaire d'entrainement en rotation d'un arbre d'un système propulsif d'un hélicoptère qui puisse être fabriqué à des coûts compatibles avec des objectifs de rentabilité et d'optimisation des dépenses. L'invention vise aussi à fournir un hélicoptère équipé d'un système auxiliaire selon l'invention.

### 4. Exposé de l'invention

Pour ce faire, l'invention concerne un système auxiliaire d'entrainement en rotation d'un arbre, dit arbre relais, d'un système propulsif d'un hélicoptère comprenant au moins un turbomoteur relié à une boite de transmission de puissance adaptée pour entrainer en rotation un rotor de l'hélicoptère, ledit système comprenant :
- ledit arbre relais,
- une unité de commande,
- un moteur hydraulique relié mécaniquement audit arbre relais et adapté pour pouvoir l'entraîner en rotation,
   - un circuit hydraulique d'alimentation en liquide sous pression dudit moteur hydraulique,
   - une vanne hydraulique à ouverture rapide commandée agencée sur le circuit hydraulique et adaptée pour être placée sur commande au moins dans une position ouverte dans laquelle le liquide peut alimenter ledit moteur hydraulique pour permettre un entrainement en rotation dudit arbre relais, ou dans une position fermée dans laquelle ledit moteur hydraulique n'est plus alimenté en liquide sous pression.

Un système auxiliaire selon l'invention est caractérisé en ce que ledit système comprend en outre un stockeur pyro-hydraulique piloté par une unité de commande et relié à ladite vanne hydraulique dudit circuit hydraulique par une ligne d'alimentation en liquide, ledit stockeur pyro-hydraulique comprenant :
- une enceinte comprenant un piston délimitant deux compartiments étanches, un compartiment principal comprenant au moins une cartouche de propergol solide, et un compartiment de réserve de liquide débouchant dans ladite ligne d'alimentation en liquide,
- une charge d'allumage reliée audit compartiment principal et adaptée pour initier la combustion d'au moins une cartouche de propergol solide sur commande de ladite unité de commande.

Un système selon l'invention comprend donc un stockeur pyro-hydraulique - dont la partie hydraulique est de préférence complètement indépendante du réseau hydraulique de l'hélicoptère - qui permet de mettre sous pression un liquide d'un circuit hydraulique relié à un moteur hydraulique d'entrainement en rotation d'un arbre relais d'un système propulsif d'un hélicoptère.

Le stockeur pyro-hydraulique du système selon l'invention comprend un générateur de gaz de petite dimension qui est formé par au moins une cartouche de propergol solide. Une fois allumé, le gaz produit par la cartouche applique une pression sur le piston de l'enceinte, ce qui permet de mettre sous pression le liquide de la réserve de liquide. Ce liquide est expulsé vers le moteur hydraulique par le biais de la ligne d'alimentation du circuit hydraulique et du circuit hydraulique, ce qui permet d'entrainer en rotation l'arbre relais relié mécaniquement au moteur hydraulique.

L'alimentation en liquide du moteur hydraulique est réalisée par la coopération du stockeur pyro-hydraulique et d'une vanne à ouverture rapide commandée.

Le stockeur pyro-hydraulique d'un système selon l'invention combine les avantages d'une solution pyrotechnique et les avantages d'une solution hydraulique, sans néanmoins devoir en supporter les inconvénients.

En particulier, le système selon l'invention tire parti à la fois de la densité d'énergie d'une solution pyrotechnique (par le biais du compartiment principal logeant des cartouches de propergol solide) et de la densité de puissance d'une solution hydraulique (par le biais de la réserve de liquide du deuxième compartiment).

Un système selon l'invention peut être indépendant à la fois du réseau électrique de l'hélicoptère et du réseau hydraulique. En particulier, aucune batterie de stockage d'énergie électrique n'est nécessaire. De plus, une ou plusieurs cartouches de propergol solide sont suffisantes pour assurer la mise en rotation de l'arbre relais. La solution proposée permet donc de fournir une puissance mécanique d'appoint, sans générer des problèmes d'encombrement, de masse et de coût.

Son faible encombrement autorise une intégration du système dans un compartiment moteur.

En outre, un système selon l'invention est simple d'utilisation et peut-être testé sur banc avant son intégration sur un hélicoptère.

Un système selon l'invention permet également de délivrer un couple constant, ce qui facilite son intégration dans une architecture d'un hélicoptère.

Un système selon l'invention ne présente pas d'éléments en permanence sous pression. De plus, une fois la charge allumée et le système activé, le gaz libéré reste confiné dans un volume fermé, ce qui facilite le classement au transport, la mise en œuvre et la certification de l'objet.

Avantageusement et selon l'invention, ledit compartiment principal de ladite enceinte dudit stockeur pyro-hydraulique comprend au moins deux cartouches de propergol solide.

Selon cette variante, au moins deux cartouches à propergol solide sont utilisées dans le compartiment principal pour générer davantage de pression lors de l'activation de la charge d'allumage. Cela permet par exemple d'entrainer des arbres relais nécessitant un couple au démarrage important.

Avantageusement et selon l'invention, ladite enceinte comprend une membrane étanche agencée entre les cartouches à propergol solide et ledit piston.

Cette membrane étanche vise à garantir l'étanchéité entre les deux compartiments de l'enceinte.

Avantageusement et selon l'invention, ledit piston est un piston à sections différentielles configuré pour pouvoir comprimer le liquide dudit compartiment de réserve de liquide à une pression différente de la pression du gaz du compartiment principal.

Selon cette variante, la pression imprimée au liquide de la réserve de liquide est différente de la pression du gaz libéré par l'allumage de la cartouche de propergol solide. Cela permet d'adapter le couple délivré à l'arbre relais.

Avantageusement, un système selon l'invention comprend une bâche de récupération de liquide reliée audit moteur hydraulique par le biais d'un clapet de purge.

L'ensemble formé de la bâche de récupération et du clapet de purge permet une expulsion du liquide du circuit hydraulique dès que la pression du liquide dans ce circuit dépasse un seuil prédéterminé, et une récupération de ce liquide expulsé dans la bâche de récupération. Le clapet de purge définit le seuil prédéterminé à partir duquel le liquide est expulsé du circuit hydraulique.

Avantageusement, un système selon l'invention comprend au moins une roue libre portée par ledit arbre relais.

La présence de la roue libre permet d'éviter un entraînement spontané du moteur hydraulique par l'arbre relais.

Selon une variante, l'arbre relais portant une roue libre est un arbre d'une boîte d'accessoires d'un turbomoteur.

Une boîte d'accessoires d'un turbomoteur permet l'entraînement des servitudes nécessaires au fonctionnement du générateur de gaz du turbomoteur et d'équipements de l'hélicoptère, comme par exemple les dispositifs de conditionnement d'air. Selon cette variante, le moteur hydraulique est directement intégré sur cette boîte d'accessoires, ce qui permet d'une part de faciliter son installation et interconnexion avec le générateur de gaz du turbomoteur, et d'autre part, de fournir, si nécessaire, une partie de la puissance nécessaire à l'entraînement des servitudes et/ou alimentation des équipements de l'hélicoptère.

Avantageusement et selon l'invention, ledit arbre relais est un arbre de ladite boite de transmission de puissance de sorte que le système peut faire office de système d'assistance à une autorotation d'un hélicoptère monomoteur.

Selon cette variante, le système auxiliaire est utilisé pour fournir de la puissance mécanique directement à la boite de transmission de puissance lorsque nécessaire. Un tel système est donc particulièrement adapté pour assister mécaniquement l'hélicoptère au cours d'un vol en autorotation, notamment au cours des dernières phases du vol.

L'utilisation d'un système selon cette variante permet donc de fiabiliser les vols en autorotation d'un hélicoptère et d'améliorer donc sensiblement les taux d'atterrissage sans dommage nécessitant une longue immobilisation de l'hélicoptère.

Avantageusement et selon l'invention, ledit arbre relais est un arbre d'un turbomoteur du système propulsif de sorte que le système peut faire office de système de réactivation de ce turbomoteur.

Selon cette variante, le système auxiliaire est destiné à équiper un hélicoptère multimoteurs comprenant des turbomoteurs reliés à une boite de transmission de puissance, dont au moins un turbomoteur parmi lesdits turbomoteurs, dit turbomoteur hybride, est apte à fonctionner dans au moins un régime de veille au cours d'un vol stabilisé de l'hélicoptère, les autres turbomoteurs fonctionnant seuls au cours de ce vol stabilisé.

Un turbomoteur hybride est un turbomoteur configuré pour pouvoir être mis, sur commande et volontairement, dans au moins un régime de veille prédéterminé, duquel il peut sortir de manière normale ou rapide (aussi dite urgente). Un turbomoteur ne peut être en veille qu'au cours d'un vol stabilisé de l'hélicoptère, c'est-à-dire, hors panne d'un turbomoteur de l'hélicoptère, au cours d'une situation de vol de croisière, lorsqu'il évolue dans des conditions normales. La sortie du régime de veille consiste à passer le turbomoteur en mode accélération du générateur de gaz par un entrainement compatible avec le mode de sortie imposée par les conditions (sortie de veille normale ou sortie de veille rapide (aussi dite d'urgence).

Le système auxiliaire selon l'invention permet alors d'assurer la réactivation rapide du turbomoteur en veille en cas de besoin.

L'invention concerne également un hélicoptère comprenant un système propulsif, caractérisé en ce qu'il comprend en outre un système auxiliaire d'entrainement mécanique d'un arbre dudit système propulsif selon l'invention.

L'invention concerne également un système auxiliaire et un hélicoptère équipé d'un tel système, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'un système auxiliaire selon un mode de réalisation de l'invention utilisé comme dispositif de réactivation rapide d'un turbomoteur,
- la figure 2 est une vue schématique d'un stockeur pyro-hydraulique d'un système selon un autre mode de réalisation de l'invention,
- la figure 3 est une vue schématique d'un piston d'un stockeur pyro-hydraulique d'un système selon un autre mode de réalisation de l'invention.

### 6. Description détaillée d'un mode de réalisation de l'invention

Sur les figures, les échelles et les proportions ne sont pas respectées et ce, à des fins d'illustration et de clarté.

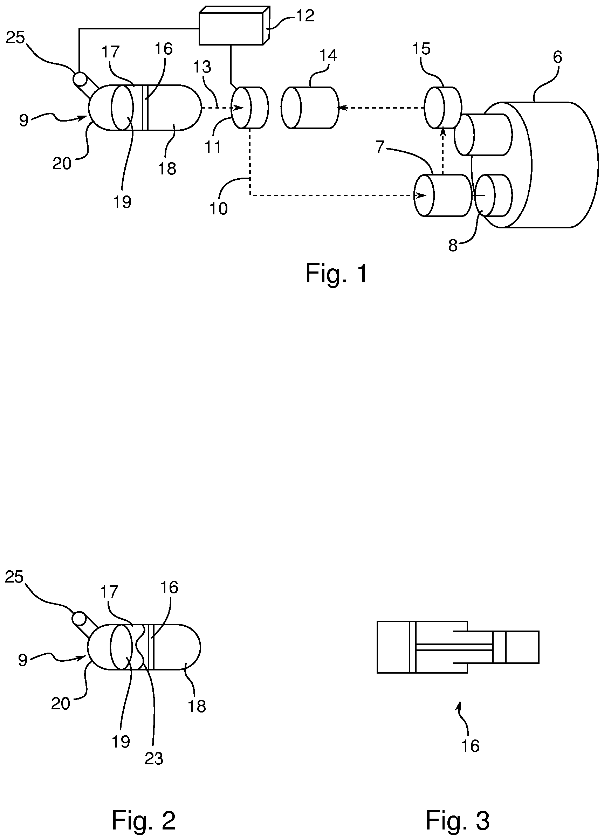

La figure 1 est une vue schématique d'un système auxiliaire d'entrainement en rotation d'un arbre 8 relais selon l'invention formé par un arbre d'un turbomoteur 6.

Un système auxiliaire selon ce mode de réalisation est donc destiné à pouvoir assurer la réactivation rapide du turbomoteur 6.

Le système selon le mode de réalisation de la figure 1 comprend un moteur 7 hydraulique relié mécaniquement au turbomoteur 6 par le biais d'une roue libre. Ce moteur 7 hydraulique peut être un moteur à pistons axiaux ou radiaux. Il a pour fonction de transformer la puissance hydraulique qu'il reçoit en une puissance mécanique permettant d'entraîner le démarrage ou la réactivation du turbomoteur 6.

Ce moteur 7 hydraulique est de préférence monté sur le turbomoteur 6 par le bais d'une boîte d'accessoires, non représentée sur la figure 1.

Le système auxiliaire selon l'invention comprend également un stockeur 9 pyro-hydraulique relié au moteur 7 hydraulique par le biais d'un circuit 10 hydraulique d'alimentation en liquide sous pression de ce moteur 7 hydraulique. Ce circuit 10 hydraulique est lui-même alimenté en liquide par une ligne 13 d'alimentation qui relie le circuit 10 hydraulique et le stockeur 9 pyro-hydraulique.

L'alimentation du moteur 7 hydraulique est dépendante d'une vanne 11 hydraulique à ouverture rapide, commandée, qui est agencée sur le circuit 10 hydraulique entre le stockeur 9 et le moteur 7 hydraulique.

Cette vanne 11 hydraulique est commandée par un dispositif 12 de commande, qui est de préférence le calculateur de commande du turbomoteur 6, qui permet en outre de définir le régime de fonctionnement du turbomoteur.

Lorsque la vanne 11 est commandée en ouverture, le liquide expulsé du stockeur 9 est éjecté vers le moteur 7 hydraulique pour que ce dernier transforme la puissance hydraulique du liquide reçu en une puissance mécanique en sortie.

Le système auxiliaire comprend également une bâche 14 de récupération de liquide reliée au moteur 7 hydraulique par le biais d'un clapet 15 de purge. Ce clapet est taré de telle sorte que le liquide est éjecté du circuit 10 dès que la pression dépasse un seuil prédéterminé.

Le stockeur 9 pyro-hydraulique comprend, selon le mode de réalisation de la figure 1, une enceinte 20, un piston 16 monobloc logé dans l'enceinte et délimitant deux compartiments 17, 18 étanches à volume variable. Le compartiment 17 loge une cartouche 19 à propergol solide et le compartiment 18 est une réserve de fluide à volume variable. Dans toute la suite, on considère que le liquide du compartiment 18 et du circuit hydraulique est de l'huile.

Le stockeur 9 comprend également une charge 25 d'allumage adaptée pour initier la combustion de la cartouche 19 à propergol solide sur commande de l'unité 12 de commande. Une fois allumé, le gaz produit par la cartouche 19 se répand dans le compartiment 17 et applique une pression sur le piston 16 de l'enceinte, ce qui permet de mettre sous pression l'huile du compartiment 18 de la réserve d'huile. L'huile est alors expulsée vers le moteur 7 hydraulique par le biais de la ligne 13 d'alimentation du circuit 10 hydraulique et du circuit 10 hydraulique en tant que tel.

Un système selon l'invention permet donc un apport ponctuel de puissance et peut être utilisé soit pour réactiver un turbomoteur en veille, soit pour assister une manœuvre d'autorotation, soit pour assure un complément de puissance propulsive instantanée, soit d'assister un hélicoptère qui a perdu le fonctionnement de l'un de ses moteurs dans le cas d'un hélicoptère bimoteurs ou trimoteurs par exemple.

Selon un autre mode de réalisation non représenté sur les figures, le stockeur 9 pyro-hydraulique comprend une pluralité de cartouches 19 à propergol solide logées dans le compartiment 17 de l'enceinte 20.

En variante ou en combinaison, et tel que représenté sur la figure 2, le stockeur peut comprendre une membrane 23 étanche agencée entre la cartouche 19 à propergol solide et le piston 16. La membrane 23 étanche vise à garantir l'étanchéité entre les deux compartiments de l'enceinte. Cette membrane peut être faite en tout type de matériau étanche.

En variante complémentaire, le rôle du piston peut être tenu par une vessie qui assurera les deux fonctions majeures recherchées : déplacement du volume et étanchéité entre les deux chambres.

Selon un autre mode de réalisation et tel que représenté sur la figure 3, le piston 16 est un piston à sections différentielles configuré pour pouvoir comprimer le liquide du compartiment de réserve de liquide à une pression différente de la pression du gaz du compartiment principal. Cela permet d'adapter le couple délivré à l'arbre relais.

Le système décrit en lien avec la figure 1 est destiné à pouvoir assurer la réactivation rapide d'un turbomoteur. Cela étant, le système selon l'invention peut être mis en œuvre pour entrainer en rotation tout arbre d'un système propulsif d'un hélicoptère, tel qu'un arbre d'une boite de transmission de puissance de l'hélicoptère, un arbre d'une boite d'accessoires, un arbre d'un générateur de gaz d'un turbomoteur, ou un arbre d'une turbine libre d'un turbomoteur. De manière générale, le système selon l'invention peut participer à entrainer en rotation, à la demande et lorsque nécessaire, tout type d'arbre d'un système propulsif. L'homme du métier pourra aisément apporter les modifications nécessaires à la description qui précède en lien avec un turbomoteur pour assurer l'utilisation du système dans les autres applications couvertes par l'invention.

## Revendications

1. Système auxiliaire d'entrainement mécanique d'un arbre, dit arbre (8) relais, d'un système propulsif d'un hélicoptère comprenant au moins un turbomoteur relié à une boite de transmission de puissance adaptée pour entrainer en rotation un rotor de l'hélicoptère, ledit système comprenant :
- ledit arbre relais (8),
- une unité de commande (12),
- un moteur (7) hydraulique relié mécaniquement audit arbre (8) relais et adapté pour pouvoir l'entraîner en rotation,
- un circuit (10) hydraulique d'alimentation en liquide sous pression dudit moteur (7) hydraulique,
- une vanne (11) hydraulique à ouverture rapide commandée agencée sur le circuit (10) hydraulique et adaptée pour être placée sur commande au moins dans une position ouverte dans laquelle le liquide peut alimenter ledit moteur (7) hydraulique pour permettre un entrainement en rotation dudit arbre (8) relais, ou dans une position fermée dans laquelle ledit moteur (7) hydraulique n'est plus alimenté en liquide sous pression,
**caractérisé en ce que** ledit système comprend en outre un stockeur (9) pyro-hydraulique piloté par l'unité (12) de commande et relié à ladite vanne (11) hydraulique dudit circuit (10) hydraulique par une ligne (13) d'alimentation en liquide, ledit stockeur (9) pyro-hydraulique comprenant :
- une enceinte (20) comprenant un piston (16) délimitant deux compartiments étanches, un compartiment (17) principal comprenant au moins une cartouche (19) de propergol solide, et un compartiment (18) de réserve de liquide débouchant dans ladite ligne (13) d'alimentation en liquide,
- une charge (25) d'allumage reliée audit compartiment (17) principal et adaptée pour initier la combustion d'au moins une cartouche (19) de propergol solide sur commande de ladite unité (12) de commande.

2. Système auxiliaire selon la revendication 1, **caractérisé en ce que** ledit compartiment (17) principal de ladite enceinte (20) dudit stockeur (9) pyro-hydraulique comprend au moins deux cartouches (19) de propergol solide.

3. Système auxiliaire selon l'une des revendications 1 ou 2, **caractérisé en ce que** ladite enceinte (20) comprend une membrane (23) étanche agencée entre les cartouches (19) à propergol solide et ledit piston (16).

4. Système selon l'une des revendications 1 à 3, **caractérisé en ce que** ledit piston (16) est un piston à sections différentielles configuré pour pouvoir comprimer le liquide dudit compartiment de réserve de liquide à une pression différente de la pression du gaz du compartiment principal.

5. Système selon l'une des revendications 1 à 4, **caractérisé en ce qu'**il comprend une bâche (14) de récupération de liquide reliée audit moteur (7) hydraulique par le biais d'un clapet (15) de purge.

6. Système selon l'une des revendications 1 à 5, **caractérisé en ce qu'**il comprend au moins une roue libre portée par ledit arbre relais.

7. Système selon l'une des revendications 1 à 6, **caractérisé en ce que** ledit arbre relais est un arbre de ladite boite de transmission de puissance de sorte que le système peut faire office de système d'assistance à une autorotation d'un hélicoptère monomoteur.

8. Système selon l'une des revendications 1 à 6, **caractérisé en ce que** ledit arbre relais est un arbre d'un turbomoteur du système propulsif de sorte que le système peut faire office de système de réactivation de ce turbomoteur.

9. Hélicoptère comprenant un système propulsif, **caractérisé en ce qu'**il comprend en outre un système auxiliaire d'entrainement mécanique d'un arbre dudit système propulsif selon l'une des revendications 1 à 8.

## Patentansprüche

1. Mechanisches Hilfsantriebssystem einer Welle, Relaiswelle (8) genannt, eines Antriebssystems eines Hubschraubers, der mindestens einen Turbomotor umfasst, der mit einem Leistungsgetriebe verbunden ist, das angepasst ist, um einen Rotor des Hubschraubers in Drehung anzutreiben, wobei das System Folgendes umfasst:
- die Relaiswelle (8),
- eine Steuereinheit (12),
- einen Hydraulikmotor (7), der mechanisch mit der Relaiswelle (8) verbunden und angepasst ist, um sie in Drehung antreiben zu können,
- einen Hydraulikkreislauf (10) zur Versorgung des Hydraulikmotors (7) mit Flüssigkeit unter Druck,
- ein hydraulisches Absperrorgan (11) mit gesteuerter Schnellöffnung, das auf dem Hydraulikkreislauf (10) eingerichtet und angepasst ist, um auf Befehl mindestens in eine offene Position, in der die Flüssigkeit den Hydraulikmotor (7) versorgen kann, um ein Antreiben der Relaiswelle (8) in Drehung zu erlauben, oder in eine geschlossene Position gestellt zu werden, in der der Hydraulikmotor (7) nicht mehr mit Flüssigkeit unter Druck versorgt wird,
**dadurch gekennzeichnet, dass** das System weiter einen pyro-hydraulischen Speicher (9) umfasst, der von einer Steuereinheit (12) angesteuert wird, und mit dem hydraulischen Absperrorgan (11) des Hydraulikkreislaufs (10) durch eine Flüssigkeitsversorgungsleitung (13) verbunden ist, wobei der pyro-hydraulische Speicher (9) umfasst:
- einen Einschluss (20), der einen Kolben (16) umfasst, der zwei dichte Kammern abgrenzt, eine Hauptkammer (17), die mindestens eine Festtreibstoffpatrone (19) umfasst, und eine Flüssigkeitsreservekammer (18), die in die Flüssigkeitsversorgungsleitung (13) mündet,
- einen Zündsatz (25), der mit der Hauptkammer (17) verbunden und angepasst ist, um die Verbrennung mindestens der Festtreibstoffpatrone (19) auf Befehl der Steuereinheit (12) einzuleiten.

2. Hilfssystem nach Anspruch 1, **dadurch gekennzeichnet, dass** die Hauptkammer (17) des Einschlusses (20) des pyro-hydraulischen Speichers (9) mindestens zwei Festtreibstoffpatronen (19) umfasst.

3. Hilfssystem nach einem der Ansprüche 1 oder 2, **dadurch gekennzeichnet, dass** der Einschluss (20) eine dichte Membran (23) umfasst, die zwischen den Festtreibstoffpatronen (19) und dem Kolben (16) eingerichtet ist.

4. System nach einem der Ansprüche 1 bis 3, **dadurch gekennzeichnet, dass** der Kolben (16) ein Kolben mit differenziellen Sektionen ist, der konfiguriert ist, um die Flüssigkeit der Flüssigkeitsreservekammer auf einen Druck zu komprimieren, der von dem Druck des Gases der Hauptkammer unterschiedlich ist.

5. System nach einem der Ansprüche 1 bis 4, **dadurch gekennzeichnet, dass** es einen Flüssigkeitsauffangbehälter (14) umfasst, der über ein Ablassventil (15) mit dem Hydraulikmotor (7) verbunden ist.

6. System nach einem der Ansprüche 1 bis 5, **dadurch gekennzeichnet, dass** es mindestens ein freies Rad umfasst, das von der Relaiswelle getragen wird.

7. System nach einem der Ansprüche 1 bis 6, **dadurch gekennzeichnet, dass** die Relaiswelle eine Welle des Leistungsgetriebes ist, sodass das System für eine Eigendrehung eines einmotorigen Hubschraubers als Hilfssystem dienen kann.

8. System nach einem der Ansprüche 1 bis 6, **dadurch gekennzeichnet, dass** die Relaiswelle eine Welle eines Turbomotors des Antriebssystems ist, sodass das System als Wiederaktivierungssystem dieses Turbomotors dienen kann.

9. Hubschrauber, der ein Antriebssystem umfasst, **dadurch gekennzeichnet, dass** er weiter ein mechanisches Hilfsantriebssystem einer Welle des Antriebssystems nach einem der Ansprüche 1 bis 8 umfasst.

## Claims

1. Auxiliary system for mechanically driving a shaft, called relay shaft (8), of a helicopter propulsion system comprising at least one turboshaft engine connected to a power transmission box adapted to drive in rotation a rotor of the helicopter, said system comprising:
- said relay shaft (8),
- a control unit (12),
- a hydraulic motor (7) mechanically connected to said relay shaft (8) and adapted to be able to drive it in rotation,
- a hydraulic circuit (10) for supplying a pressurised liquid to said hydraulic motor (7),
- a controlled, fast-opening hydraulic valve (11) arranged on the hydraulic circuit (10) and adapted to be placed on command at least in one open position wherein the liquid can supply said hydraulic motor (7) to enable a driving in rotation of said relay shaft (8), or in a closed position wherein said hydraulic motor (7) is no longer supplied with pressurised liquid,
**characterised in that** said system further comprises a pyro-hydraulic storage unit (9) driven by the control unit (12) and connected to said hydraulic valve (11) of said hydraulic circuit (10) by a liquid supply line (13), said pyro-hydraulic storage unit (9) comprising:
- an enclosure (20) comprising a piston (16) that defines two sealed compartments, a main compartment (17) comprising at least one solid propellant cartridge (19), and a compartment (18) for a liquid reserve opening into said liquid supply line (13),
- an ignition charge (25) connected to said main compartment (17) and adapted to initiate the combustion of at least one solid propellant cartridge (19) upon receiving a command from said control unit (12).

2. Auxiliary system according to claim 1, **characterised in that** said main compartment (17) of said enclosure (20) of said pyro-hydraulic storage unit (9) comprises at least two solid propellant cartridges (19).

3. Auxiliary system according to one of claims 1 or 2, **characterised in that** said enclosure (20) comprises a sealed membrane (23) arranged between the solid propellant cartridges (19) and said piston (16).

4. System according to one of claims 1 to 3, **characterised in that** said piston (16) is a differential section piston configured to be able to compress the liquid from said compartment for a liquid reserve at a pressure different from the pressure of the gas of the main compartment.

5. System according to one of claims 1 to 4, **characterised in that** it comprises a tarpaulin (14) for liquid recovery connected to said hydraulic motor (7) by means of a drainage valve (15).

6. System according to one of claims 1 to 5, **characterised in that** it comprises at least one freewheel carried by said relay shaft.

7. System according to one of claims 1 to 6, **characterised in that** said relay shaft is a shaft of said power transmission box so that the system can act as an assistance system for an autorotation of a single-engine helicopter.

8. System according to one of claims 1 to 6, **characterised in that** said relay shaft is a shaft of a turboshaft engine of the propulsion system so that the system can act as a reactivation system of this turboshaft engine.

9. Helicopter comprising a propulsion system, **characterised in that** it further comprises an auxiliary system for mechanically driving a shaft of said propulsion system according to one of claims 1 to 8.
